# EUROPEAN PATENT SPECIFICATION

(11) **EP 4 618 128 B1**
(45) Date of publication and mention of the grant of the patent: **19.08.2026**
(21) Application number: 25163688.2
(22) Date of filing: 14.03.2025
(51) Int. Cl.: H01H 85/00, H01H 85/20, H01H 85/22

(54) **FUSE HOLDER, ELECTRICAL CIRCUIT, POWER DISTRIBUTION CIRCUIT AND POWER DISTRIBUTION UNIT**
SICHERUNGSHALTER, ELEKTRISCHER STROMKREIS, STROMVERTEILUNGSSCHALTUNG UND STROMVERTEILUNGSEINHEIT
PORTE-FUSIBLE, CIRCUIT ÉLECTRIQUE, CIRCUIT DE DISTRIBUTION D'ÉNERGIE ET UNITÉ DE DISTRIBUTION D'ÉNERGIE

(30) Priority: 15.03.2024 CN 202410298627
(43) Date of publication of application: 17.09.2025
(73) Proprietor: Suzhou Littelfuse Ovs Co., Ltd., Suzhou, Jiangsu 215021 (CN)
(72) Inventor: Pan, Shangchun, Suzhou, 215021 (CN); Cheng, Du, Suzhou, 215021 (CN)
(74) Representative: Arnold & Siedsma

(56) References cited:
- CN-U- 218 939 586
- DE-A1- 102017 011 561
- GB-A- 2 282 713
- US-A1- 2021 257 176
- US-A1- 2023 104 770
- US-B1- 9 991 611

## Description

### FIELD

The present disclosure generally relates to fuse devices. More particularly, the present disclosure relates to a fuse holder for a fuse device.

### BACKGROUND

Fuse devices are well known in the art, and known systems and methods for securing and supporting a fuse device include suspending a fuse body between terminals that are fixed with securing mechanisms, such as bolts. Document US 2023/104770 A1 discloses an example of a fuse holder according to the preamble of claim 1. As such, the fuse body is suspended without any direct support thereto or thereon, directly contacting only the terminals.

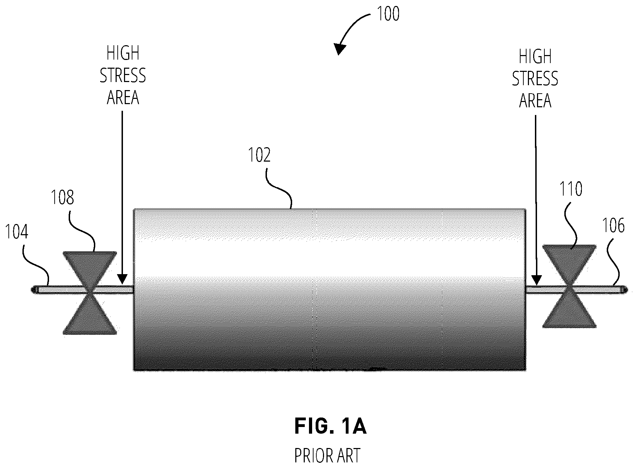

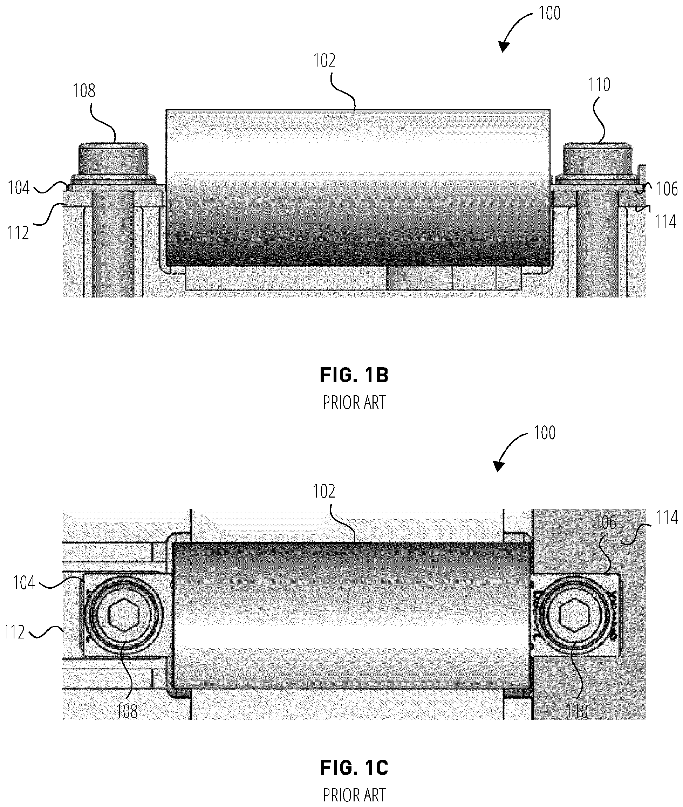

For example FIG. 1A, FIG. 1B, and FIG. 1C illustrate a fuse device system 100 known in the art. As seen, a fuse body 102 is suspended between a terminal 104 and a terminal 106. A securing mechanism 108 fixes the terminal 104 to a busbar 112, and a securing mechanism 110 fixes the terminal 106 to a busbar 114, but neither the securing mechanism 108 nor the securing mechanism 110 provides any support to the fuse body 102.

When the fuse device is vibrating, such as during a vibration test or during use, the fuse body shakes violently without anything to minimize movement thereof. As such, points of the terminal 104 and the terminal 106 labeled in FIG. 1A as a high stress area are, in fact, subject to high stress and prone to breakage, cracking, and/or damage thereto.

In view of the above, there is a continuing, ongoing need for improved systems and methods for securing and supporting fuse devices.

### BRIEF SUMMARY

This Brief Summary is provided to introduce a selection of concepts in a simplified form that are further described below in the Detailed Description. This Brief Summary is not intended to identify key features or essential features of claimed subject matter or intended as an aid in determining scope of the claimed subject matter.

A fuse holder according to the present invention includes a planar portion with an aperture for receiving a securing mechanism therein, a first extension portion disposed adjacent to and extending from a first end of the planar portion at an angle relative to the planar portion, a first end of the first extension portion spanning a length of the first end of the planar portion, and a first annular portion disposed adjacent to and extending from a second end of the first extension portion, the first annular portion having a partially circumferential shape for receiving a cylindrically-shaped fuse body therein, wherein the second end of the first extension portion can be adjacent to the first end of the first extension portion.

The angle between the planar portion and the first extension portion can be greater than 0 and less than 90°.

According to the present invention, The angle between the planar portion and the first end of the first extension portion is constant, and the angle between the planar portion and the second end of the first extension portion progressively increases or decreases to match the partially circumferential shape of the first annular portion.

A center of origin for the partially circumferential shape of the first annular portion can be outside of the planar portion.

The fuse holder can include a support structure between at least part of the first end of the planar portion and at least part of the first end of the first extension portion.

At least part of the first end of the planar portion and at least part of the first end of the first extension portion can be partially raised or partially depressed to form the support structure.

The first annular portion can be shaped for circumscribing and holding a majority of half of a circumference of the cylindrically-shaped fuse body.

The fuse holder can include a second extension portion disposed adjacent to and extending from a second end of the planar portion at an angle relative to the planar portion, a first end of the second extension portion spanning a length of the second end of the planar portion, and a second annular portion disposed adjacent to and extending from a second end of the second extension portion, the second annular portion having the partially circumferential shape for receiving the cylindrically-shaped fuse body therein, wherein the second end of the second extension portion can be adjacent to the first end of the second extension portion, and wherein the second end of the planar portion can be parallel to the first end of the planar portion.

The first annular portion can be shaped for circumscribing and holding a majority of a first half of a circumference of the cylindrically-shaped fuse body, and the second annular portion can be shaped for circumscribing and holding a majority of a second half of the circumference of the cylindrically-shaped fuse body.

An open end of the first annular portion can be offset from an open end of the second annular portion by approximately 180° on the circumference of the cylindrically-shaped fuse body.

An electrical circuit can includes a fuse device, the fuse device including a cylindrically-shaped fuse body disposed between a first terminal and a second terminal, a first fuse holder secured to the first terminal with a first securing mechanism and circumscribing and holding a majority of at least half of a circumference of the cylindrically-shaped fuse body at a first end of the cylindrically-shaped fuse body, and a second fuse holder secured to the second terminal with a second securing mechanism and circumscribing and holding a majority of at least half of the circumference of the cylindrically-shaped fuse body at a second end of the cylindrically-shaped fuse body, wherein each of the first fuse holder and the second fuse holder can include a planar portion with an aperture for receiving the first securing mechanism or the second securing mechanism therein, a first extension portion disposed adjacent to and extending from a first end of the planar portion at an angle relative to the planar portion, a first end of the first extension portion spanning a length of the first end of the planar portion, and a first annular portion disposed adjacent to and extending from a second end of the first extension portion, the first annular portion having a partially circumferential shape for receiving the cylindrically-shaped fuse body therein, wherein the second end of the first extension portion can be adjacent to the first end of the first extension portion.

The planar portion of the first fuse holder can rest on top of the first terminal, which can rest on top of a first busbar, and the planar portion of the second fuse holder can rest on top of the second terminal, which can rest on top of a second busbar.

The aperture of the planar portion of the first fuse holder can align with apertures of the first terminal and the first busbar for receiving the first securing mechanism therein, and the aperture of the planar portion of the second fuse holder can align with apertures of the second terminal and the second busbar for receiving the second securing mechanism therein.

Current can flow from the first busbar to the first terminal through the cylindrically-shaped fuse body to the second terminal to the second busbar without flowing through or interruption by the first fuse holder or the second fuse holder.

An open end of the first annular portion of the first fuse holder can be offset from an open end of the first annular portion of the second fuse holder by approximately 180° on the circumference of the cylindrically-shaped fuse body.

Each of the first fuse holder and the second fuse holder can include a second extension portion disposed adjacent to and extending from a second end of the planar portion at an angle relative to the planar portion, a first end of the second extension portion spanning a length of the second end of the planar portion, and a second annular portion disposed adjacent to and extending from a second end of the second extension portion, the second annular portion having the partially circumferential shape for receiving the cylindrically-shaped fuse body therein, wherein the second end of the second extension portion can be adjacent to the first end of the second extension portion, and wherein the second end of the planar portion can be parallel to the first end of the planar portion.

The first annular portion of the first fuse holder can circumscribe and hold a majority of a first half of the circumference of the cylindrically-shaped fuse body at the first end thereof, the second annular portion of the first fuse holder can circumscribe and hold a majority of a second half of the circumference of the cylindrically-shaped fuse body at the first end thereof, the first annular portion of the second fuse holder can circumscribe and hold a majority of the first half of the circumference of the cylindrically-shaped fuse body at the second end thereof, and the second annular portion of the second fuse holder can circumscribe and hold a majority of the second half of the circumference of the cylindrically-shaped fuse body at the second end thereof.

A power distribution circuit can include the electrical circuit with the fuse device, the first fuse holder, and the second fuse holder.

A power distribution unit can include an electrical circuit that can includes a fuse device and a fuse holder, wherein a fuse body of the fuse device can be mechanically secured in place via a first part of the fuse holder holding the fuse body, wherein an electrical terminal of the fuse device can be mechanically secured in place via apertures of a second part of the fuse holder, the electrical terminal, and a busbar receiving a securing mechanism therein, and wherein current can flow from the busbar through the fuse device without flowing through or interruption by the fuse holder.

The fuse holder can hold the fuse body at a first end of the fuse body and at a second end of the fuse body.

Other technical features may be readily apparent to one skilled in the art from the following figures, descriptions, and claims.

### BRIEF DESCRIPTION OF THE SEVERAL VIEWS OF THE DRAWINGS

FIG. 1A is a side view illustrating a fuse device system known in the art.
FIG. 1B is a side view illustrating a fuse device system known in the art.
FIG. 1C is a top view illustrating a fuse device system known in the art.
FIG. 2A is a perspective view illustrating a fuse device system in accordance the present disclosure.
FIG. 2B is a top view illustrating a fuse device system in accordance the present disclosure.
FIG. 2C is a side view illustrating a fuse device system in accordance the present disclosure.
FIG. 3A is a perspective view illustrating a fuse holder in accordance the present disclosure.
FIG. 3B is a side view illustrating a fuse holder in accordance the present disclosure.
FIG. 3C is a perspective view illustrating a fuse holder in operation in accordance the present disclosure.
FIG. 3D is a side view illustrating a fuse holder in operation in accordance the present disclosure.
FIG. 3E is an exploded view illustrating a fuse holder in operation in accordance the present disclosure.
FIG. 4A is a perspective view illustrating a fuse holder in accordance the present disclosure.
FIG. 4B is a side view illustrating a fuse holder in accordance the present disclosure.
FIG. 4C is a perspective view illustrating a fuse holder in operation in accordance the present disclosure.
FIG. 4D is a perspective view illustrating a fuse holder in operation in accordance the present disclosure.
FIG. 4E is an exploded view illustrating a fuse holder in operation in accordance the present disclosure.
FIG. 5A is a side view illustrating current flow in a fuse device system in accordance the present disclosure.
FIG. 5B is side view illustrating current flow in a fuse device system in accordance the present disclosure.
FIG. 6 is a schematic view illustrating electrical circuits in a power distribution unit in accordance the present disclosure.

### DETAILED DESCRIPTION

The present disclosure will now be described more fully hereinafter with reference made to the accompanying drawings.

In accordance the present disclosure, a fuse holder can be secured to a terminal of a fuse device while also supporting and holding a fuse body of the fuse device. In this manner, the fuse holder can protect the fuse device by preventing and/or minimizing the fuse body from shaking when the fuse device is vibrating, thereby avoiding vibration issues associated with fuse devices known in the art. Advantageously, the fuse holder can provide mechanical support to the fuse device, including the fuse body, without interruption of or impact on current flow through the fuse device and without impacting any electrical connections of the fuse device.

The fuse holder disclosed herein can be used in connection with any fuse device as would be understood by one of ordinary skill in the art, including a fuse device with any weight. However, because fuse devices with heavy weights are known to suffer the most damage when vibrating, the fuse holder disclosed herein can be used, in particular, with heavy fuse devices, such as fuse devices weighing 90-380g, fuse devices weighing up to 2000g, or fuse devices weighing more than 2000g. The fuse holder disclosed herein can be designed with the strength needed to hold a fuse device of any weight in the manner disclosed herein.

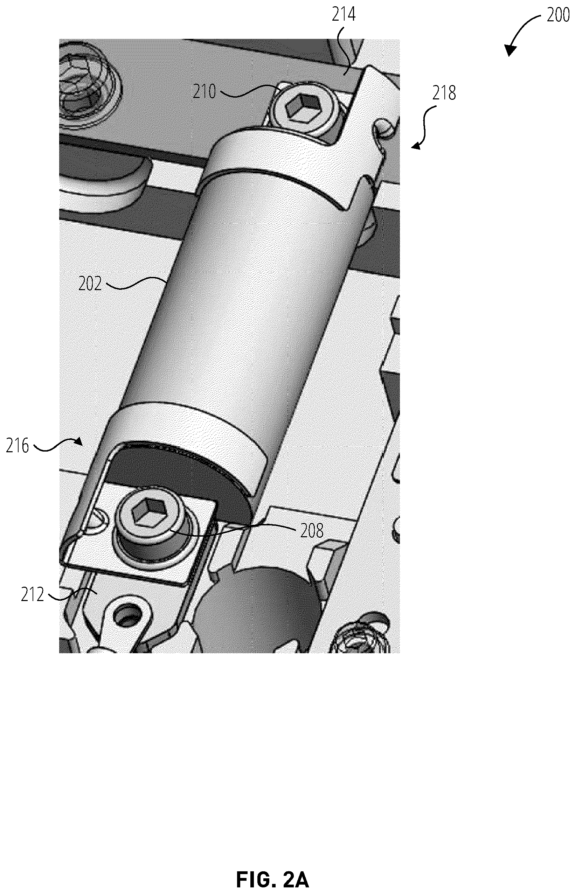

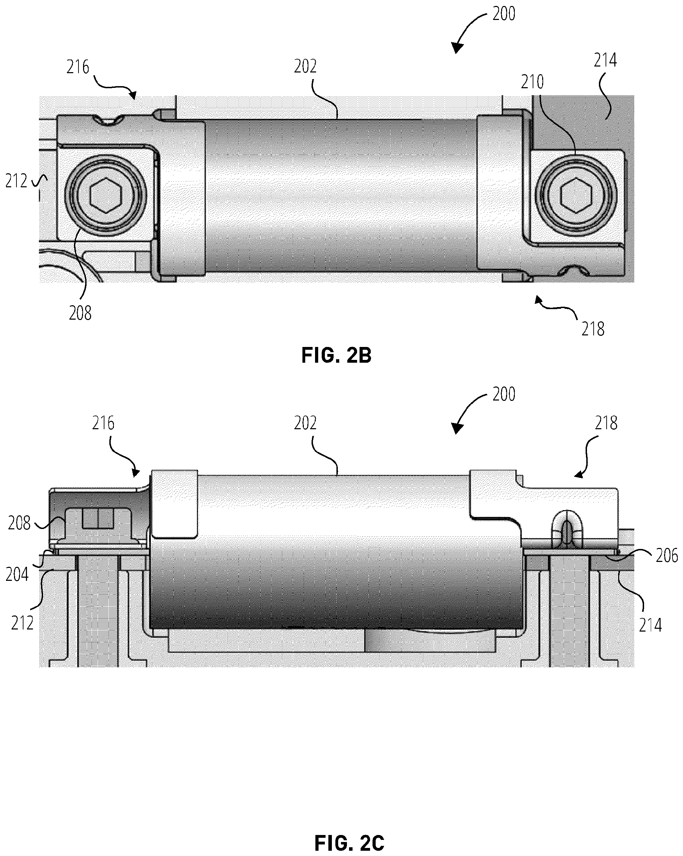

FIG. 2A, FIG. 2B, and FIG. 2C illustrate a fuse device system 200 in accordance the present disclosure. As seen, the fuse device system 200 can include a fuse holder 216 fixing a terminal 204 to a busbar 212 and holding a first end of a fuse body 202 and a fuse holder 218 fixing a terminal 206 to a busbar 214 and holding a second end of the fuse body 202.

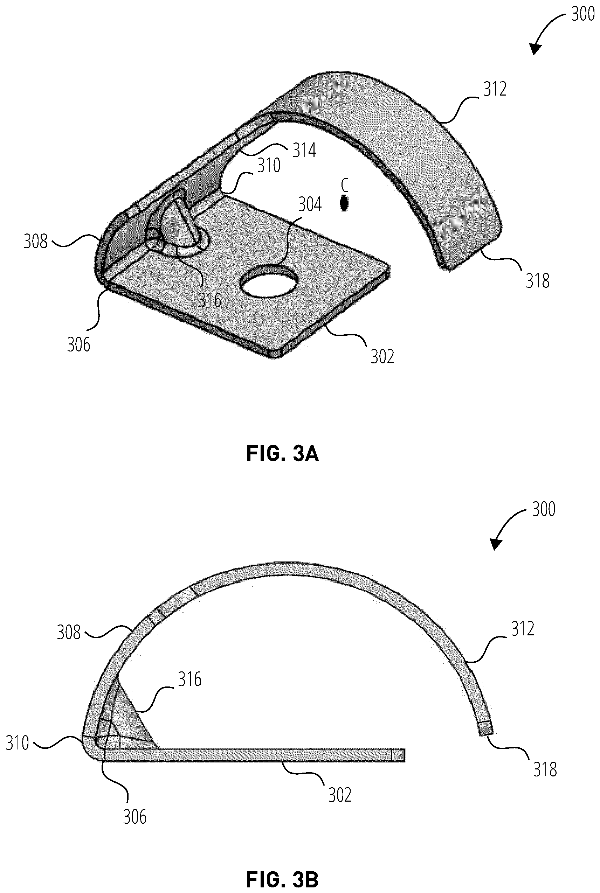

FIG. 3A and FIG. 3B illustrate a fuse holder 300 in accordance with the present disclosure. However, it is to be understood that that fuse holder 300 can be the same or similar to the fuse holder 216 and/or the fuse holder 218.

As seen, the fuse holder 300 includes a planar portion 302, an extension portion 308, and an annular portion 312. The planar portion 302, the extension portion 308, and the annular portion 312 can include one contiguous piece of material shaped to form the fuse holder 300. For example, the planar portion 302, the extension portion 308, and the annular portion 312 can be stamped or injection molded to form the fuse holder 300. The fuse holder 300 can include stainless steel or a copper alloy.

The planar portion 302 can be flat like a washer and be any shape as would be known and desired by one of ordinary skill in the art. For example, although the planar portion 302 is shown as rectangular or square in FIG. 3A and FIG. 3B, the planar portion 302 can be rectangular, square, circular, oval, triangular, hexagonal, and the like. The planar portion 302 can include an aperture 304 for receiving a securing mechanism therein.

The extension portion 308 is disposed adjacent to and extending from a first end 306 of the planar portion 302 at an angle relative to the planar portion 302. A first end 310 of the extension portion 308 can span a length of the first end 306 of the planar portion 302. However, the first end 310 of the extension portion 308 can span part of the length of the first end 306 of the planar portion 302. The angle between the planar portion 302 and the extension portion 308 can be greater than 0 and less than 90°. According to the present invention, the angle between the planar portion 302 and the first end 310 of the extension portion 308 is constant, and the angle between the planar portion 302 and a second end 314 of the extension portion 308 progressively increases or decreases to match a partially circumferential shape of the annular portion 312.

In this regard, the annular portion 312 is disposed adjacent to and extending from the second end 314 of the extension portion 308 such that the second end 314 of the extension portion 308 is adjacent to the first end 310 of the extension portion 308. As such, a center of origin C for the partially circumferential shape of the annular portion 312 can be outside of the planar portion 302. That is, the annular portion 312 does not need to overhang the planar portion 302. The partially circumferential shape of the annular portion 312 can be shaped for receiving a cylindrically-shaped fuse body therein, and the annular portion 312 can be shaped for circumscribing and holding a majority of half of a circumference of the cylindrically-shaped fuse body.

Although the annular portion 312 is shown with a round shape in the figures, it is to be understood that the annular portion 312 could have any shape as would be known and desired by one of ordinary skill in the art. For example, the annular portion 312 could be rectangular or any other shape that enables circumscribing and holding a fuse body. Indeed, if the fuse body has a square shape, then the annular portion 312 can have a corresponding square shape for circumscribing and holding at least part of an exterior of the fuse body.

The fuse holder 300 can also include a support structure 316 between at least part of the first end 306 of the planar portion 302 and at least part of the first end 310 of the extension portion 308 to provide additional stability and strength to the fuse holder 300. At least part of the first end 306 of the planar portion 302 and at least part of the first end 310 of the extension portion 308 can be partially raised or partially depressed to form the support structure 316.

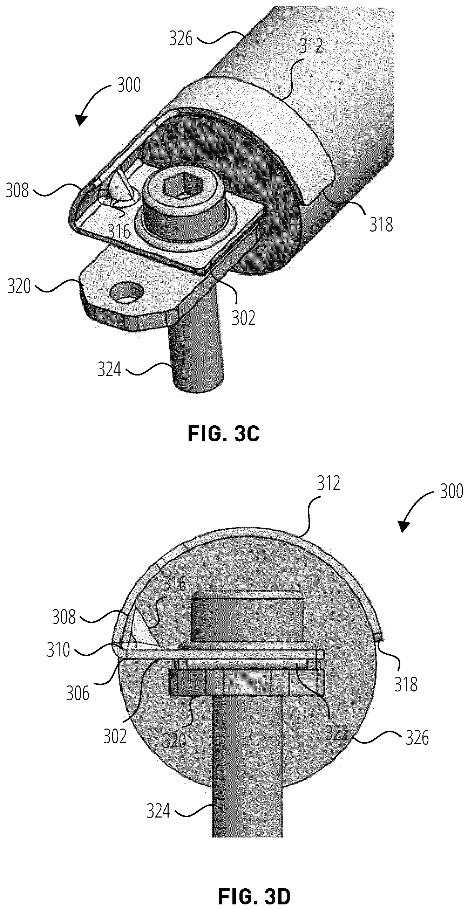

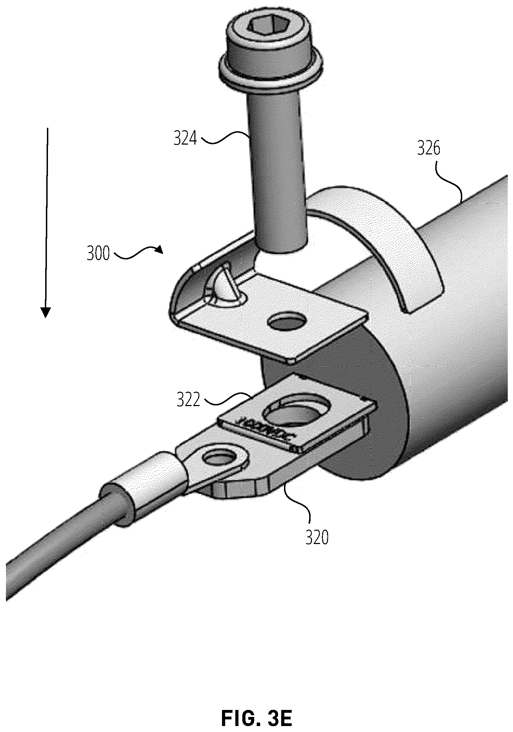

In operation and as seen in FIG. 3C, FIG. 3D, and FIG. 3E, the fuse holder 300 can be secured to a terminal 322 via a securing mechanism 324, such as a bolt, and hold a fuse body 326. For example, the fuse body 326 can be cylindrically-shaped, and the fuse holder 300 can hold the majority of at least half of the circumference of the fuse body 326.

The planar portion 302 of the fuse holder 300 can rest on top of the terminal 322, and the terminal 322 can rest on top of a busbar 320. Additionally or alternatively, the aperture 304 of the planar portion 302 of the fuse holder 300 can align with apertures of the terminal 322 and the busbar 320 for receiving the securing mechanism 324 therein.

To install the fuse holder 300, the securing mechanism 324 can be removed from the terminal 322 and the busbar 320. Then, as best seen in FIG. 3E, the fuse holder 300 can be placed as illustrated and described, for example, by vertically placing the fuse holder 300 on top of the terminal 322 and the fuse body 326, before securing with the securing mechanism 324 as illustrated and described.

Although only one terminal 322 and one end of the fuse body 326 are shown in FIG. 3C, FIG. 3D, and FIG. 3E, it is to be understood that a fuse holder can be used in connection with both ends of a fuse device as shown in FIG. 2A, FIG. 2B, and FIG. 2C. For example, the fuse body 326 can be disposed between the terminal 322 and a second terminal, the fuse holder 300 can secure and hold the fuse device at a first end thereof as described, and a second fuse holder can secure and hold the fuse device at a second end thereof. For example, the second fuse holder can be secured to the second terminal via a second securing mechanism, such as a bolt, and hold the fuse body 326 at the second end thereof. As above, the second fuse holder can hold the majority of at least half of the circumference of the fuse body 326.

As best seen in FIG. 2A, FIG. 2B, and FIG. 2C, an open end of the annular portion 312 of the fuse holder 300 can be offset from an open end of the annular portion of the second fuse holder by approximately 180° on the circumference of the cylindrically-shaped fuse body 300.

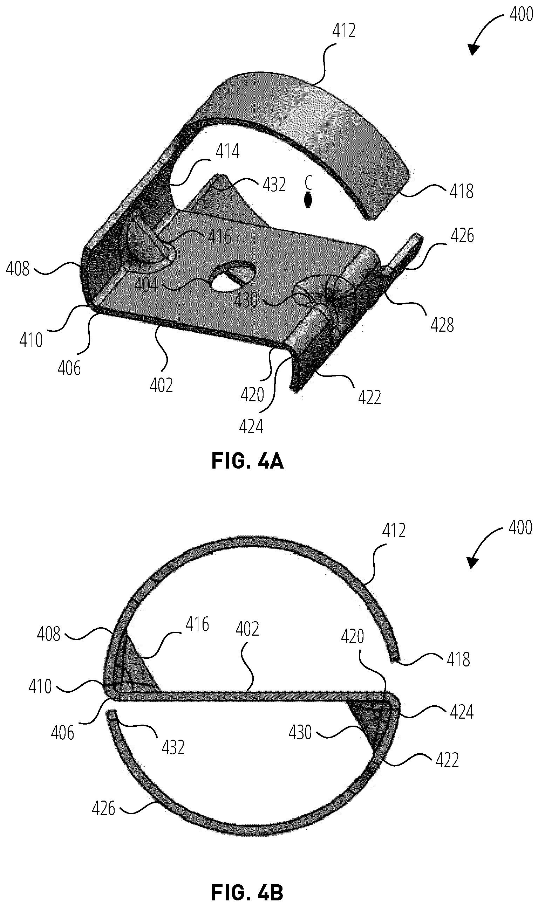

Another example of a fuse holder 400 is illustrated in FIG. 4A and FIG. 4B. As seen, the fuse holder 400 can include a planar portion 402, a first extension portion 408, a first annular portion 412, a second extension portion 422, and a second annular portion 426. The planar portion 402, the first extension portion 408, the first annular portion 412, the second extension portion 422, and the second annular portion 426 can include one contiguous piece of material shaped to form the fuse holder 400. For example, the planar portion 402, the first extension portion 408, the first annular portion 412, the second extension portion 422, and the second annular portion 426 can be stamped or injection molded to form the fuse holder 400. The fuse holder 400 can include stainless steel or a copper alloy.

The planar portion 402 can be flat like a washer and be any shape as would be known and desired by one of ordinary skill in the art. For example, although the planar portion 402 is shown as rectangular or square in FIG. 4A and FIG. 4B, the planar portion 402 can be rectangular, square, circular, oval, triangular, hexagonal, and the like. The planar portion 402 can include an aperture 404 for receiving a securing mechanism therein.

The first extension portion 408 can be disposed adjacent to and extending from a first end 406 of the planar portion 402 at an angle relative to the planar portion 402. A first end 410 of the first extension portion 408 can span a length of the first end 406 of the planar portion 402. However, , the first end 410 of the first extension portion 408 can span part of the length of the first end 406 of the planar portion 402. The angle between the planar portion 402 and the first extension portion 408 can be greater than 0 and less than 90°. Additionally or alternatively, the angle between the planar portion 402 and the first end 410 of the first extension portion 408 can be constant, but the angle between the planar portion 402 and a second end 414 of the first extension portion 408 can progressively increase or decrease to match a partially circumferential shape of the first annular portion 412.

In this regard, the first annular portion 412 can be disposed adjacent to and extending from the second end 414 of the first extension portion 408 such that the second end 414 of the first extension portion 408 can be adjacent to the first end 410 of the first extension portion 408. As such, a center of origin C for the partially circumferential shape of the first annular portion 412 can be outside of the planar portion 402. The partially circumferential shape of the first annular portion 412 can be shaped for receiving a cylindrically-shaped fuse body therein, , the first annular portion 412 can be shaped for circumscribing and holding a majority of a first half of a circumference of the cylindrically-shaped fuse body. The first half of the circumference of the cylindrically-shaped fuse body can include a top half thereof.

Similarly, the second extension portion 422 can be disposed adjacent to and extending from a second end 420 of the planar portion 402 at an angle relative to the planar portion 402 such that the second end 420 of the planar portion can be parallel to the first end 406 of the planar portion 402. A first end 424 of the second extension portion 422 can span a length of the second end 420 of the planar portion 402. However, the first end 424 of the second extension portion 422 can span part of the length of the second end 420 of the planar portion 402. The angle between the planar portion 402 and the second extension portion 422 can be greater than 0 and less than 90°. Additionally or alternatively, the angle between the planar portion 402 and the first end 424 of the second extension portion 422 can be constant, but the angle between the planar portion 402 and a second end 428 of the second extension portion 422 can progressively increase or decrease to match a partially circumferential shape of the second annular portion 426.

In this regard, the second annular portion 426 can be disposed adjacent to and extending from the second end 428 of the second extension portion 422 such that the second end 428 of the second extension portion 422 can be adjacent to the first end 424 of the second extension portion 422. As such, a center of origin C for the partially circumferential shape of the second annular portion 426 can be outside of the planar portion 402, and the center of origin C for the first annular portion 412 can the same point as the center of origin for the second annular portion 426. The partially circumferential shape of the second annular portion 426 can be shaped for receiving the cylindrically-shaped fuse body therein, and, the second annular portion 426 can be shaped for circumscribing and holding a majority of a second half of the circumference of the cylindrically-shaped fuse body. The second half of the circumference of the cylindrically-shaped fuse body can include a bottom half thereof. As such, the fuse holder 400 can hold substantially all of the circumference of the cylindrically-shaped fuse body.

An open end 418 of the first annular portion 412 can be offset from an open end 432 of the second annular portion 426 by approximately 180° on the circumference of the cylindrically-shaped fuse body.

Although the first annular portion 412 and the second annular portion 426 are shown with round shapes in the figures, the first annular portion 412 and the second annular portion 426 could have any shape as would be known and desired by one of ordinary skill in the art. For example, one or both of the first annular portion 412 and the second annular portion 426 could be rectangular or any other shape that enables circumscribing and holding a fuse body. Indeed, if the fuse body has a square shape, then the first annular portion 412 and the second annular portion 426 can have corresponding square shapes for circumscribing and holding at least part of an exterior of the fuse body.

The fuse holder 400 can also include a support structure 416 between at least part of the first end 406 of the planar portion 402 and at least part of the first end 410 of the first extension portion 408 to provide additional stability and strength to the fuse holder 400. At least part of the first end 406 of the planar portion 402 and at least part of the first end 410 of the first extension portion 408 can be partially raised or partially depressed to form the support structure 416. Additionally or alternatively, the fuse holder 400 can include a support structure 430 between at least part of the second end 420 of the planar portion 402 and at least part of the first end 424 of the second extension portion 422 to provide additional stability and strength to the fuse holder 400. At least part of the second end 420 of the planar portion 402 and at least part of the first end 424 of the second extension portion 422 can be partially raised or partially depressed to form the support structure 430.

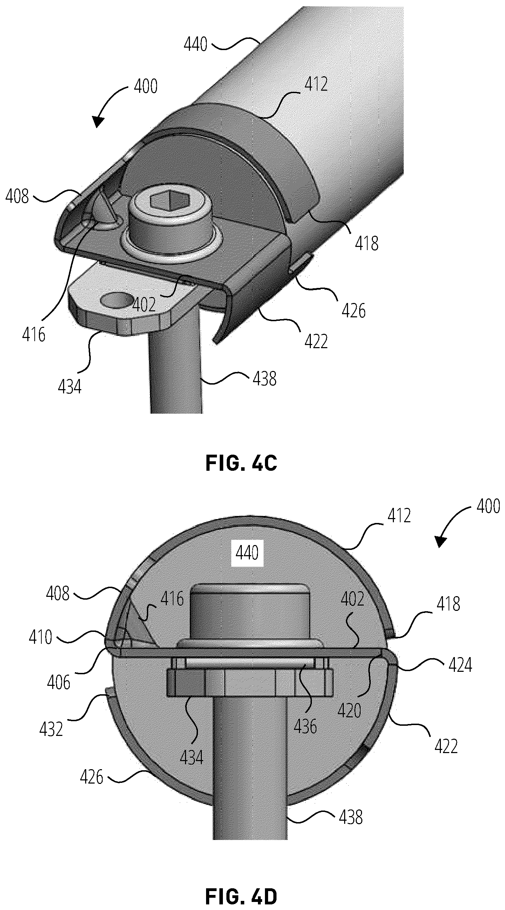

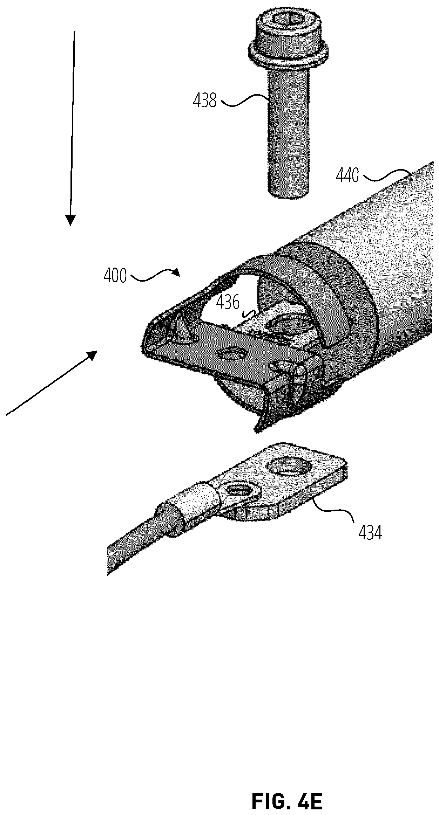

In operation and as seen in FIG. 4C, FIG. 4D, and FIG. 4E, the fuse holder 400 can be secured to a terminal 436 via a securing mechanism 438, such as a bolt, and hold a fuse body 440. For example, the fuse body 440 can be cylindrically-shaped, and the fuse holder 400 can hold the majority of the circumference of the fuse body 440.

The planar portion 402 of the fuse holder 400 can rest on top of the terminal 436, and the terminal 436 can rest on top of a busbar 434. Additionally or alternatively, the aperture 404 of the planar portion 402 of the fuse holder 400 can align with apertures of the terminal 436 and the busbar 434 for receiving the securing mechanism 438 therein.

To install the fuse holder 400, the securing mechanism 438 can be removed from the terminal 436 and the busbar 434, and the terminal 436 can be removed from the busbar 434. Then, as best seen in FIG. 4E, the fuse holder 400 can be placed as illustrated and described, for example, by horizontally sliding the fuse holder 400 over the terminal 436 and the fuse body 440, and the terminal 436 can be placed relative to the busbar 434 before securing with the securing mechanism 438 as illustrated and described.

Although only one terminal 436 and one end of the fuse body 440 are shown in FIG. 4C, FIG. 4D, and FIG. 4E, it is to be understood that a fuse holder can be used in connection with both ends of a fuse device as shown in FIG. 2A, FIG. 2B, and FIG. 2C. For example, the fuse body 440 can be disposed between the terminal 436 and a second terminal, the fuse holder 400 can secure and hold the fuse device at a first end thereof as described, and a second fuse holder can secure and hold the fuse device at a second end thereof. For example, the second fuse holder can be secured to the second terminal via a second securing mechanism, such as a bolt, and hold the fuse body 440 at the second end thereof. As above, the second fuse holder can hold the majority of the circumference of the fuse body 440.

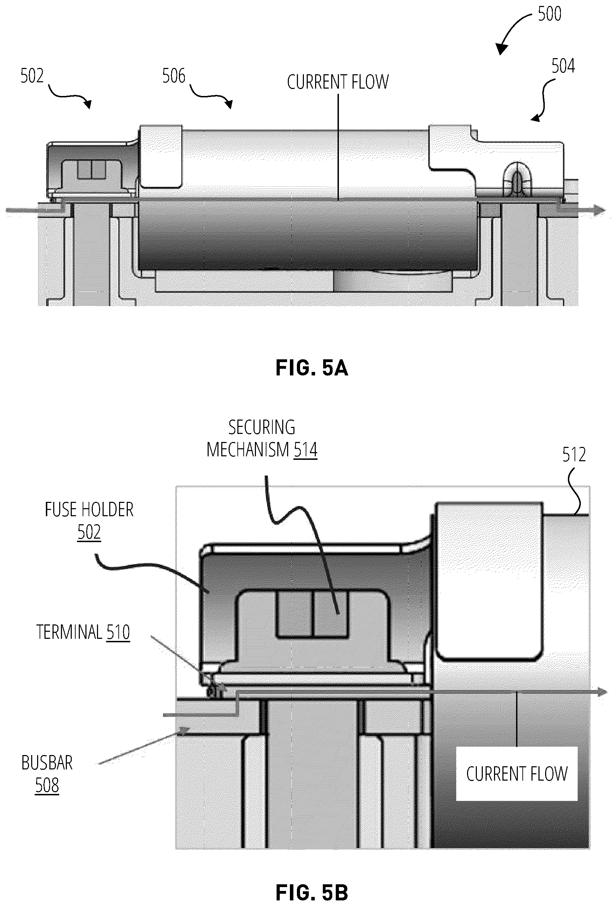

Current need not flow through the fuse holder, and thus, need not be impacted or interrupted by the fuse holder. For example, FIG. 5A and FIG. 5B illustrate current flow in a fuse device system 500 in accordance the present disclosure. As seen, a first fuse holder 502 can secure and hold a first end of a fuse device 506, and a second fuse fuse fuse holder 504 can hold and secure a second end of the fuse device 506. Current can enter the fuse device 506 by flowing from a first busbar 508 to a first terminal 510 before flowing into a fuse body 512 of the fuse device 506. However, because a design and a shape of the fuse holder 502 facilitate an arrangement of the fuse holder 502 relative to the fuse device 506 as illustrated and described, the current does not flow through the fuse holder 502. Indeed, the current is not impacted or interrupted by the fuse holder 502. Similarly, the current can exit the fuse device 506 by flowing from the fuse body 512 of the fuse device 506 to a second terminal and to a second busbar. However, because a design and a shape of the fuse holder 504 relative to the fuse device 506 facilitate an arrangement of the fuse holder 504 relative to the fuse device 506 as illustrated and described, the current does not flow through the fuse holder 504.

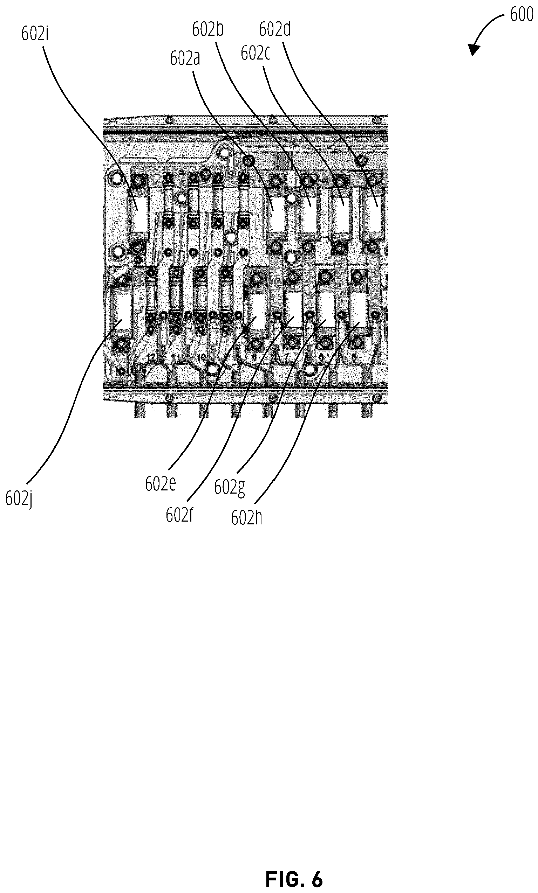

The fuse holder disclosed herein can be part of an electrical circuit that includes a fuse device. Similarly, the fuse holder disclosed herein can be part of a power distribution circuit that includes electrical circuits. For example, FIG. 6 illustrates electrical circuits in a power distribution unit 600 in accordance the present disclosure. As seen, the power distribution unit 600 can include one or more electrical circuits that include fuse devices 602a, fuse devices 602b, fuse devices 602c, fuse devices 602d, fuse devices 602e, fuse devices 602f, fuse devices 602g, fuse devices 602h, fuse devices 602i, fuse devices 602j--collectively referred to as fuse devices 602. Any or all of the fuse devices 602 can be secured and held by a fuse holder as disclosed herein. For example, a fuse body of any of the fuse devices 602 can be mechanically secured in place via a first part of a fuse holder holding the fuse body, and electrical terminals of any of the fuse devices 602 can be mechanically secured in place via apertures of a second part of the fuse holder, the electrical terminals, and one or more busbars receiving one or more securing mechanisms therein. The fuse holder can secure and hold any of the fuse devices 602 at one end thereof, and the fuse holder can secure and hold any of the fuse devices 602 at first and second ends thereof.

## Claims

1. A fuse holder (300, 400) comprising:
a planar portion (302, 402) with an aperture (304, 404) for receiving a securing mechanism (324, 438) therein;
a first extension portion (308, 408) disposed adjacent to and extending from a first end (306, 406) of the planar portion (302, 402) at an angle relative to the planar portion (302, 402), a first end (310, 410) of the first extension portion (308, 408) spanning a length of the first end (306, 406) of the planar portion (302, 402); and
a first annular portion (312, 412) disposed adjacent to and extending from a second end (314, 414) of the first extension portion (308, 408), the first annular portion (312, 412) having a partially circumferential shape for receiving a cylindrically-shaped fuse body (326, 440) therein,
wherein the second end (314, 414) of the first extension portion (308, 408) is adjacent to the first end (310, 410) of the first extension portion (308, 408),
wherein the angle between the planar portion (302, 402) and the first end (310, 410) of the first extension portion (308, 408) is constant, and
**characterised in that** the angle between the planar portion (302, 402) and the second end (314, 414) of the first extension portion (308, 408) progressively increases or decreases to match the partially circumferential shape of the first annular portion (312, 412).

2. The fuse holder of claim 1, wherein the angle between the planar portion (302, 402) and the first extension portion (308, 408) is greater than 0 and less than 90°.

3. The fuse holder of any of the preceding claims, wherein a center of origin (C) for the partially circumferential shape of the first annular portion (312, 412) is outside of the planar portion (302, 402).

4. The fuse holder of any of the preceding claims, further comprising:
a support structure (316, 416) between at least part of the first end (306, 406) of the planar portion (302, 402) and at least part of the first end (310, 410) of the first extension portion (308, 408), preferably wherein at least part of the first end (306, 406) of the planar portion (302, 402) and at least part of the first end (310, 410) of the first extension portion (308, 408) are partially raised or partially depressed to form the support structure (316, 416).

5. The fuse holder of any of the preceding claims, wherein the first annular portion (312, 412) is shaped for circumscribing and holding a majority of half of a circumference of the cylindrically-shaped fuse body (326, 440).

6. The fuse holder of any of the preceding claims, further comprising:
a second extension portion (422) disposed adjacent to and extending from a second end (420) of the planar portion (402) at an angle relative to the planar portion (402), a first end (424) of the second extension portion (422) spanning a length of the second end (420) of the planar portion (402); and
a second annular portion (426) disposed adjacent to and extending from a second end (428) of the second extension portion (422), the second annular portion (426) having the partially circumferential shape for receiving the cylindrically-shaped fuse body (440) therein,
wherein the second end (428) of the second extension portion (422) is adjacent to the first end (424) of the second extension portion (422), and
wherein the second end (420) of the planar portion (402) is parallel to the first end (406) of the planar portion (402), preferably
wherein the first annular portion (412) is shaped for circumscribing and holding a majority of a first half of a circumference of the cylindrically-shaped fuse body (440), and wherein the second annular portion (426) is shaped for circumscribing and holding a majority of a second half of the circumference of the cylindrically-shaped fuse body (440), more preferably
wherein an open end (418) of the first annular portion (412) is offset from an open end (432) of the second annular portion (426) by approximately 180° on the circumference of the cylindrically-shaped fuse body (440).

7. An electrical circuit comprising:
a fuse device (506), the fuse device (506) including a cylindrically-shaped fuse body (512) disposed between a first terminal (510) and a second terminal (510);
a first fuse holder (502) according to any of the preceding claims, secured to the first terminal (510) with a first securing mechanism (324) and circumscribing and holding a majority of at least half of a circumference of the cylindrically-shaped fuse body (512) at a first end thereof; and
a second fuse holder (504) according to any of the preceding claims, secured to the second terminal with a second securing mechanism and circumscribing and holding a majority of at least half of the circumference of the cylindrically-shaped fuse body (512) at a second end thereof

8. The electrical circuit of claim 7, wherein the planar portion (302, 402) of the first fuse holder (502) rests on top of the first terminal (510), which rests on top of a first busbar (508), and wherein the planar portion (302, 402) of the second fuse holder (504) rests on top of the second terminal, which rests on top of a second busbar.

9. The electrical circuit of claim 7 or 8, wherein the aperture (304, 404) of the planar portion (302, 402) of the first fuse holder (502) aligns with apertures of the first terminal (510) and the first busbar (508) for receiving the first securing mechanism (324) therein, and wherein the aperture (304, 404) of the planar portion (302, 402) of the second fuse holder (504) aligns with apertures of the second terminal and the second busbar for receiving the second securing mechanism.

10. The electrical circuit of claim 8 or 9, wherein current flows from the first busbar (508) to the first terminal (510) through the cylindrically-shaped fuse body (512) to the second terminal to the second busbar without flowing through or interruption by the first fuse holder (502) or the second fuse holder (504).

11. The electrical circuit of any of the claims 7-10, wherein an open end of the first annular portion of the first fuse holder (502) is offset from an open end of the first annular portion of the second fuse holder (504) by approximately 180° on the circumference of the cylindrically-shaped fuse body (512).

12. The electrical circuit of any of the claims 7-11, wherein each of the first fuse holder (502) and the second fuse holder (504) comprise:
a second extension portion (422) disposed adjacent to and extending from a second end (420) of the planar portion (402) at an angle relative to the planar portion (402), a first end (424) of the second extension portion (422) spanning a length of the second end (420) of the planar portion (402); and
a second annular portion (426) disposed adjacent to and extending from a second end (428) of the second extension portion (422), the second annular portion (426) having the partially circumferential shape for receiving the cylindrically-shaped fuse body (512) therein,
wherein the second end (428) of the second extension portion (422) is adjacent to the first end (424) of the second extension portion (422), and
wherein the second end (420) of the planar portion (402) is parallel to the first end (406) of the planar portion (402), preferably wherein the first annular portion (412) of the first fuse holder (502) circumscribes and holds a majority of a first half of the circumference of the cylindrically-shaped fuse body (512) at the first end thereof, wherein the second annular portion (426) of the first fuse holder (502) circumscribes and holds a majority of a second half of the circumference of the cylindrically-shaped fuse body (512) at the first end thereof, wherein the first annular portion (412) of the second fuse holder (504) circumscribes and holds a majority of the first half of the circumference of the cylindrically-shaped fuse body (512) at the second end thereof, and wherein the second annular portion (426) of the second fuse holder (504) circumscribes and holds a majority of the second half of the circumference of the cylindrically-shaped fuse body (512) at the second end thereof.

13. A power distribution circuit comprising the electrical circuit of any of the claims 7-12.

14. A power distribution unit (600) comprising:
an electrical circuit that includes a fuse device (602); and
a fuse holder (300, 400) according to any of the preceding claims 1-6,
wherein a fuse body of the fuse device (602) is mechanically secured via the annular portion (312, 412, 426) of the fuse holder (300, 400),
wherein an electrical terminal of the fuse device is mechanically secured to a busbar (508, 434) via the planar portion (302, 402) of the fuse holder (300, 400), and
wherein current flows from the busbar through the fuse device without flowing through or interruption by the fuse holder (300, 400).

## Patentansprüche

1. Sicherungshalter (300, 400), umfassend:
einen ebenen Abschnitt (302, 402) mit einer Öffnung (304, 404) zum Aufnehmen eines Befestigungsmechanismus (324, 438) darin;
einen ersten Erstreckungsabschnitt (308, 408), der angrenzend an ein erstes Ende (306, 406) des ebenen Abschnitts (302, 402) angeordnet ist und sich von diesem in einem Winkel relativ zu dem ebenen Abschnitt (302, 402) erstreckt, wobei ein erstes Ende (310, 410) des ersten Erstreckungsabschnitts (308, 408) eine Länge des ersten Endes (306, 406) des ebenen Abschnitts (302, 402) überspannt; und
einen ersten ringförmigen Abschnitt (312, 412), der angrenzend an ein zweites Ende (314, 414) des ersten Erstreckungsabschnitts (308, 408) angeordnet ist und sich von diesem erstreckt, wobei der erste ringförmige Abschnitt (312, 412) eine teilweise umlaufende Form zum Aufnehmen eines zylinderförmigen Sicherungskörpers (326, 440) darin aufweist,
wobei das zweite Ende (314, 414) des ersten Erstreckungsabschnitts (308, 408) an das erste Ende (310, 410) des ersten Erstreckungsabschnitts (308, 408) angrenzt,
wobei der Winkel zwischen dem ebenen Abschnitt (302, 402) und dem ersten Ende (310, 410) des ersten Erstreckungsabschnitts (308, 408) konstant ist, und
**dadurch gekennzeichnet, dass** der Winkel zwischen dem ebenen Abschnitt (302, 402) und dem zweiten Ende (314, 414) des ersten Erstreckungsabschnitts (308, 408) allmählich zunimmt oder abnimmt, um sich an die teilweise umlaufende Form des ersten ringförmigen Abschnitts (312, 412) anzupassen.

2. Sicherungshalter nach Anspruch 1, wobei der Winkel zwischen dem ebenen Abschnitt (302, 402) und dem ersten Erstreckungsabschnitt (308, 408) größer als 0 und kleiner als 90° ist.

3. Sicherungshalter nach einem der vorstehenden Ansprüche, wobei ein Ursprungsmittelpunkt (C) für die teilweise umlaufende Form des ersten ringförmigen Abschnitts (312, 412) außerhalb des ebenen Abschnitts (302, 402) liegt.

4. Sicherungshalter nach einem der vorstehenden Ansprüche, ferner umfassend:
eine Stützstruktur (316, 416) zwischen mindestens einem Teil des ersten Endes (306, 406) des ebenen Abschnitts (302, 402) und mindestens einem Teil des ersten Endes (310, 410) des ersten Erstreckungsabschnitts (308, 408), vorzugsweise wobei mindestens ein Teil des ersten Endes (306, 406) des ebenen Abschnitts (302, 402) und mindestens ein Teil des ersten Endes (310, 410) des ersten Erstreckungsabschnitts (308, 408) teilweise angehoben oder teilweise vertieft sind, um die Stützstruktur (316, 416) zu bilden.

5. Sicherungshalter nach einem der vorstehenden Ansprüche, wobei der erste ringförmige Abschnitt (312, 412) zum Umschließen und Halten eines Großteils der Hälfte eines Umfangs des zylinderförmigen Sicherungskörpers (326, 440) geformt ist.

6. Sicherungshalter nach einem der vorstehenden Ansprüche, ferner umfassend:
einen zweiten Erstreckungsabschnitt (422), der angrenzend an ein zweites Ende (420) des ebenen Abschnitts (402) angeordnet ist und sich von diesem in einem Winkel relativ zu dem ebenen Abschnitt (402) erstreckt, wobei ein erstes Ende (424) des zweiten Erstreckungsabschnitts (422) eine Länge des zweiten Endes (420) des ebenen Abschnitts (402) überspannt; und
einen zweiten ringförmigen Abschnitt (426), der angrenzend an ein zweites Ende (428) des zweiten Erstreckungsabschnitts (422) angeordnet ist und sich von diesem erstreckt, wobei der zweite ringförmige Abschnitt (426) die teilweise umlaufende Form zum Aufnehmen des zylinderförmigen Sicherungskörpers (440) darin aufweist,
wobei das zweite Ende (428) des zweiten Erstreckungsabschnitts (422) an das erste Ende (424) des zweiten Erstreckungsabschnitts (422) angrenzt, und
wobei das zweite Ende (420) des ebenen Abschnitts (402) parallel zu dem ersten Ende (406) des ebenen Abschnitts (402) ist, vorzugsweise
wobei der erste ringförmige Abschnitt (412) zum Umschließen und Halten eines Großteils einer ersten Hälfte eines Umfangs des zylinderförmigen Sicherungskörpers (440) geformt ist, und wobei der zweite ringförmige Abschnitt (426) zum Umschließen und Halten eines Großteils einer zweiten Hälfte des Umfangs des zylinderförmigen Sicherungskörpers (440) geformt ist, mehr bevorzugt
wobei ein offenes Ende (418) des ersten ringförmigen Abschnitts (412) gegenüber einem offenen Ende (432) des zweiten ringförmigen Abschnitts (426) um etwa 180° auf dem Umfang des zylinderförmigen Sicherungskörpers (440) versetzt ist.

7. Elektrische Schaltung, umfassend:
eine Sicherungsvorrichtung (506), wobei die Sicherungsvorrichtung (506) einen zylinderförmigen Sicherungskörper (512) einschließt, der zwischen einem ersten Anschluss (510) und einem zweiten Anschluss (510) angeordnet ist;
einen ersten Sicherungshalter (502) nach einem der vorstehenden Ansprüche, der mit einem ersten Befestigungsmechanismus (324) an dem ersten Anschluss (510) befestigt ist und einen Großteil von mindestens der Hälfte eines Umfangs des zylinderförmigen Sicherungskörpers (512) an einem ersten Ende davon umschließt und hält; und
einen zweiten Sicherungshalter (504) nach einem der vorstehenden Ansprüche, der mit einem zweiten Befestigungsmechanismus an dem zweiten Anschluss befestigt ist und einen Großteil von mindestens der Hälfte des Umfangs des zylinderförmigen Sicherungskörpers (512) an einem zweiten Ende davon umschließt und hält.

8. Elektrische Schaltung nach Anspruch 7, wobei der ebene Abschnitt (302, 402) des ersten Sicherungshalters (502) auf dem ersten Anschluss (510) aufliegt, der auf einer ersten Sammelschiene (508) aufliegt, und wobei der ebene Abschnitt (302, 402) des zweiten Sicherungshalters (504) auf dem zweiten Anschluss aufliegt, der auf einer zweiten Sammelschiene aufliegt.

9. Elektrische Schaltung nach Anspruch 7 oder 8, wobei die Öffnung (304, 404) des ebenen Abschnitts (302, 402) des ersten Sicherungshalters (502) mit Öffnungen des ersten Anschlusses (510) und der ersten Sammelschiene (508) zum Aufnehmen des ersten Befestigungsmechanismus (324) darin fluchtet, und wobei die Öffnung (304, 404) des ebenen Abschnitts (302, 402) des zweiten Sicherungshalters (504) mit Öffnungen des zweiten Anschlusses und der zweiten Sammelschiene zum Aufnehmen des zweiten Befestigungsmechanismus fluchtet.

10. Elektrische Schaltung nach Anspruch 8 oder 9, wobei Strom von der ersten Sammelschiene (508) zu dem ersten Anschluss (510) durch den zylinderförmigen Sicherungskörper (512) zu dem zweiten Anschluss zu der zweiten Sammelschiene fließt, ohne durch den ersten Sicherungshalter (502) oder den zweiten Sicherungshalter (504) zu fließen oder durch diese unterbrochen zu werden.

11. Elektrische Schaltung nach einem der Ansprüche 7 bis 10, wobei ein offenes Ende des ersten ringförmigen Abschnitts des ersten Sicherungshalters (502) gegenüber einem offenen Ende des ersten ringförmigen Abschnitts des zweiten Sicherungshalters (504) um etwa 180° auf dem Umfang des zylinderförmigen Sicherungskörpers (512) versetzt ist.

12. Elektrische Schaltung nach einem der Ansprüche 7 bis 11, wobei der erste Sicherungshalter (502) und der zweite Sicherungshalter (504) jeweils umfassen:
einen zweiten Erstreckungsabschnitt (422), der angrenzend an ein zweites Ende (420) des ebenen Abschnitts (402) angeordnet ist und sich von diesem in einem Winkel relativ zu dem ebenen Abschnitt (402) erstreckt, wobei ein erstes Ende (424) des zweiten Erstreckungsabschnitts (422) eine Länge des zweiten Endes (420) des ebenen Abschnitts (402) überspannt; und einen zweiten ringförmigen Abschnitt (426), der angrenzend an ein zweites Ende (428) des zweiten Erstreckungsabschnitts (422) angeordnet ist und sich von diesem erstreckt, wobei der zweite ringförmige Abschnitt (426) die teilweise umlaufende Form zum Aufnehmen des zylinderförmigen Sicherungskörpers (512) darin aufweist,
wobei das zweite Ende (428) des zweiten Erstreckungsabschnitts (422) an das erste Ende (424) des zweiten Erstreckungsabschnitts (422) angrenzt, und
wobei das zweite Ende (420) des ebenen Abschnitts (402) parallel zu dem ersten Ende (406) des ebenen Abschnitts (402) ist, vorzugsweise wobei der erste ringförmige Abschnitt (412) des ersten Sicherungshalters (502) einen Großteil einer ersten Hälfte des Umfangs des zylinderförmigen Sicherungskörpers (512) an einem ersten Ende davon umschließt und hält, wobei der zweite ringförmige Abschnitt (426) des ersten Sicherungshalters (502) einen Großteil einer zweiten Hälfte des Umfangs des zylinderförmigen Sicherungskörpers (512) an einem ersten Ende davon umgibt und hält, wobei der erste ringförmige Abschnitt (412) des zweiten Sicherungshalters (504) einen Großteil der ersten Hälfte des Umfangs des zylinderförmigen Sicherungskörpers (512) an einem zweiten Ende davon umschließt und hält, und wobei der zweite ringförmige Abschnitt (426) des zweiten Sicherungshalters(504) einen Großteil der zweiten Hälfte des Umfangs des zylinderförmigen Sicherungskörpers (512) an dem zweiten Ende davon umschließt und hält.

13. Stromverteilungsschaltung, umfassend die elektrische Schaltung nach einem der Ansprüche 7 bis 12.

14. Stromverteilungseinheit (600), umfassend:
eine elektrische Schaltung, die eine Sicherungsvorrichtung (602) einschließt; und
einen Sicherungshalter (300, 400) nach einem der vorstehenden Ansprüche 1 bis 6,
wobei ein Sicherungskörper der Sicherungsvorrichtung (602) über den ringförmigen Abschnitt (312, 412, 426) des Sicherungshalters (300, 400) mechanisch befestigt ist,
wobei ein elektrischer Anschluss der Sicherungsvorrichtung über den ebenen Abschnitt (302, 402) des Sicherungshalters (300, 400) mechanisch an einer Sammelschiene (508, 434) befestigt ist, und
wobei Strom von der Sammelschiene durch die Sicherungsvorrichtung fließt, ohne durch den Sicherungshalter (300, 400) zu fließen oder durch diesen unterbrochen zu werden.

## Revendications

1. Porte-fusible (300, 400) comprenant :
une portion plane (302, 402) avec une ouverture (304, 404) permettant de recevoir un mécanisme de fixation (324, 438) dans celle-ci ;
une première portion d'extension (308, 408) disposée de manière à être adjacente à une première extrémité (306, 406) de la portion plane (302, 402) et s'étendant à partir de celle-ci selon un angle par rapport à la portion plane (302, 402), une première extrémité (310, 410) de la première portion d'extension (308, 408) englobant une longueur de la première extrémité (306, 406) de la portion plane (302, 402) ; et
une première portion annulaire (312, 412) disposée de manière à être adjacente à une seconde extrémité (314, 414) de la première portion d'extension (308, 408) et s'étendant à partir de celle-ci, la première portion annulaire (312, 412) ayant une forme partiellement circonférentielle permettant de recevoir un corps de fusible de forme cylindrique (326, 440) dans celle-ci,
dans lequel la seconde extrémité (314, 414) de la première portion d'extension (308, 408) est adjacente à la première extrémité (310, 410) de la première portion d'extension (308, 408),
dans lequel l'angle entre la portion plane (302, 402) et la première extrémité (310, 410) de la première portion d'extension (308, 408) est constant, et
**caractérisé en ce que** l'angle entre la portion plane (302, 402) et la seconde extrémité (314, 414) de la première portion d'extension (308, 408) augmente ou diminue progressivement pour concorder avec la forme partiellement circonférentielle de la première portion annulaire (312, 412).

2. Porte-fusible selon la revendication 1, dans lequel l'angle entre la portion plane (302, 402) et la première portion d'extension (308, 408) est supérieur à 0 et inférieur à 90°.

3. Porte-fusible selon l'une quelconque des revendications précédentes, dans lequel un centre d'origine (C) pour la forme partiellement circonférentielle de la première portion annulaire (312, 412) est à l'extérieur de la portion plane (302, 402).

4. Porte-fusible selon l'une quelconque des revendications précédentes, comprenant en outre :
une structure de support (316, 416) entre au moins une partie de la première extrémité (306, 406) de la portion plane (302, 402) et au moins une partie de la première extrémité (310, 410) de la première portion d'extension (308, 408), de préférence dans lequel au moins une partie de la première extrémité (306, 406) de la portion plane (302, 402) et au moins une partie de la première extrémité (310, 410) de la première portion d'extension (308, 408) sont partiellement surélevées ou partiellement renfoncées pour former la structure de support (316, 416).

5. Porte-fusible selon l'une quelconque des revendications précédentes, dans lequel la première portion annulaire (312, 412) est mise en forme pour circonscrire et maintenir une majorité d'une moitié d'une circonférence du corps de fusible de forme cylindrique (326, 440).

6. Porte-fusible selon l'une quelconque des revendications précédentes, comprenant en outre :
une seconde portion d'extension (422) disposée de manière à être adjacente à une seconde extrémité (420) de la portion plane (402) et s'étendant à partir de celle-ci selon un angle par rapport à la portion plane (402), une première extrémité (424) de la seconde portion d'extension (422) englobant une longueur de la seconde extrémité (420) de la portion plane (402) ; et
une seconde portion annulaire (426) disposée de manière à être adjacente à une seconde extrémité (428) de la seconde portion d'extension (422) et s'étendant à partir de celle-ci, la seconde portion annulaire (426) ayant la forme partiellement circonférentielle permettant de recevoir le corps de fusible de forme cylindrique (440) dans celle-ci,
dans lequel la seconde extrémité (428) de la seconde portion d'extension (422) est adjacente à la première extrémité (424) de la seconde portion d'extension (422), et
dans lequel la seconde extrémité (420) de la portion plane (402) est parallèle à la première extrémité (406) de la portion plane (402), de préférence
dans lequel la première portion annulaire (412) est mise en forme pour circonscrire et maintenir une majorité d'une première moitié d'une circonférence du corps de fusible de forme cylindrique (440), et dans lequel la seconde portion annulaire (426) est mise en forme pour circonscrire et maintenir une majorité d'une seconde moitié de la circonférence du corps de fusible de forme cylindrique (440), plus préférablement
dans lequel une extrémité ouverte (418) de la première portion annulaire (412) est décalée d'une extrémité ouverte (432) de la seconde portion annulaire (426) d'approximativement 180° sur la circonférence du corps de fusible de forme cylindrique (440).

7. Circuit électrique comprenant :
un dispositif formant fusible (506), le dispositif formant fusible (506) comportant un corps de fusible de forme cylindrique (512) disposé entre une première borne (510) et une seconde borne (510) ;
un premier porte-fusible (502) selon l'une quelconque des revendications précédentes, fixé à la première borne (510) avec un premier mécanisme de fixation (324) et circonscrivant et maintenant une majorité d'au moins une moitié d'une circonférence du corps de fusible de forme cylindrique (512) au niveau d'une première extrémité de celui-ci ; et
un second porte-fusible (504) selon l'une quelconque des revendications précédentes, fixé à la seconde borne avec un second mécanisme de fixation et circonscrivant et maintenant une majorité d'au moins une moitié de la circonférence du corps de fusible de forme cylindrique (512) au niveau d'une seconde extrémité de celui-ci.

8. Circuit électrique selon la revendication 7, dans lequel la portion plane (302, 402) du premier porte-fusible (502) repose au-dessus de la première borne (510), qui repose au-dessus d'une première barre omnibus (508), et dans lequel la portion plane (302, 402) du second porte-fusible (504) repose au-dessus de la seconde borne, qui repose au-dessus d'une seconde barre omnibus.

9. Circuit électrique selon la revendication 7 ou 8, dans lequel l'ouverture (304, 404) de la portion plane (302, 402) du premier porte-fusible (502) s'aligne avec des ouvertures de la première borne (510) et de la première barre omnibus (508) pour recevoir le premier mécanisme de fixation (324) dans celle-ci, et dans lequel l'ouverture (304, 404) de la portion plane (302, 402) du second porte-fusible (504) s'aligne avec des ouvertures de la seconde borne et de la seconde barre omnibus pour recevoir le second mécanisme de fixation.

10. Circuit électrique selon la revendication 8 ou 9, dans lequel un courant circule de la première barre omnibus (508) vers la première borne (510) à travers le corps de fusible de forme cylindrique (512) vers la seconde borne vers la seconde barre omnibus sans circulation à travers le premier porte-fusible (502) ou le second porte-fusible (504) ou interruption par celui-ci.

11. Circuit électrique selon l'une quelconque des revendications 7 à 10, dans lequel une extrémité ouverte de la première portion annulaire du premier porte-fusible (502) est décalée d'une extrémité ouverte de la première portion annulaire du second porte-fusible (504) d'approximativement 180° sur la circonférence du corps de fusible de forme cylindrique (512).

12. Circuit électrique selon l'une quelconque des revendications 7 à 11, dans lequel chacun parmi le premier porte-fusible (502) et le second porte-fusible (504) comprend :
une seconde portion d'extension (422) disposée de manière à être adjacente à une seconde extrémité (420) de la portion plane (402) et s'étendant à partir de celle-ci selon un angle par rapport à la portion plane (402), une première extrémité (424) de la seconde portion d'extension (422) englobant une longueur de la seconde extrémité (420) de la portion plane (402) ; et une seconde portion annulaire (426) disposée de manière à être adjacente à une seconde extrémité (428) de la seconde portion d'extension (422) et s'étendant à partir de celle-ci, la seconde portion annulaire (426) ayant la forme partiellement circonférentielle permettant de recevoir le corps de fusible de forme cylindrique (512) dans celle-ci,
dans lequel la seconde extrémité (428) de la seconde portion d'extension (422) est adjacente à la première extrémité (424) de la seconde portion d'extension (422), et
dans lequel la seconde extrémité (420) de la portion plane (402) est parallèle à la première extrémité (406) de la portion plane (402), de préférence dans lequel la première portion annulaire (412) du premier porte-fusible (502) circonscrit et maintient une majorité d'une première moitié de la circonférence du corps de fusible de forme cylindrique (512) au niveau de la première extrémité de celui-ci, dans lequel la seconde portion annulaire (426) du premier porte-fusible (502) circonscrit et maintient une majorité d'une seconde moitié de la circonférence du corps de fusible de forme cylindrique (512) au niveau de la première extrémité de celui-ci, dans lequel la première portion annulaire (412) du second porte-fusible (504) circonscrit et maintient une majorité de la première moitié de la circonférence du corps de fusible de forme cylindrique (512) au niveau de la seconde extrémité de celui-ci, et dans lequel la seconde portion annulaire (426) du second porte-fusible (504) circonscrit et maintient une majorité de la seconde moitié de la circonférence du corps de fusible de forme cylindrique (512) au niveau de la seconde extrémité de celui-ci.

13. Circuit de distribution de puissance comprenant le circuit électrique selon l'une quelconque des revendications 7 à 12.

14. Unité de distribution de puissance (600) comprenant :
un circuit électrique qui comporte un dispositif formant fusible (602) ; et
un porte-fusible (300, 400) selon l'une quelconque des revendications 1 à 6 précédentes,
dans laquelle un corps de fusible du dispositif formant fusible (602) est fixé mécaniquement par l'intermédiaire de la portion annulaire (312, 412, 426) du porte-fusible (300, 400),
dans laquelle une borne électrique du dispositif formant fusible est fixée mécaniquement à une barre omnibus (508, 434) par l'intermédiaire de la portion plane (302, 402) du porte-fusible (300, 400), et
dans laquelle un courant circule de la barre omnibus à travers le dispositif de fusible sans circulation à travers le porte-fusible (300, 400) ou interruption par celui-ci.
